(19) **Europäisches Patentamt European Patent Office Office européen des brevets**

(11) **EP 2 894 860 A1**

(12) **EUROPEAN PATENT APPLICATION**

(43) Date of publication:
**15.07.2015 Bulletin 2015/29**

(51) Int Cl.:
**H04N 21/2343** (2011.01)  **H04N 21/2365** (2011.01)
**H04N 21/43** (2011.01)  **H04N 21/4402** (2011.01)
**H04N 21/234** (2011.01)  **H04N 21/438** (2011.01)

(21) Application number: **14305052.4**

(22) Date of filing: **14.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing 92130 Issy-les-Moulineaux (FR)**

(72) Inventors:
• **Ricard, Julien 35576 Cesson-Sévigné (FR)**

• **Champel, Mary-Luc 35576 Cesson-Sévigné (FR)**
• **Llach, Joan 35576 Cesson-Sévigné (FR)**
• **Guede, Céline 35576 Cesson-Sévigné (FR)**

(74) Representative: **Huchet, Anne Technicolor 1, rue Jeanne d'Arc 92443 Issy-les-Moulineaux Cedex (FR)**

(54) **Method and apparatus for multiplexing layered coded contents**

(57) When layered coded content is transmitted over a fixed capacity network link, bitrate peaks may occur at similar time instances at the base layer and enhancement layer. To more efficiently use the bandwidth, the present principles propose different methods, such as adding a delay to a base layer bit stream or an enhancement layer bit stream, and shifting an "over-the-limit" portion of bits by a time window. At the receiver side, the present principles provide different channel change mechanisms to allow a user to change channel quickly even given the delay added in the bit streams. In particular, a decoder can start rendering the base layer content, without having to wait for the enhancement layer to be available. In one embodiment, the decoding of the base layer content is slowed down in order to align in time with the enhancement layer content.

FIG. 3

**Description**

<u>**TECHNICAL FIELD**</u>

This invention relates to a method and an apparatus for multiplexing, and more particularly, to a method and an apparatus for multiplexing multiple bit streams corresponding to layered coded contents, and a method and apparatus for processing the same.

<u>**BACKGROUND**</u>

When transporting Audio Video (AV) streams, one common challenge is to send as many streams (channels) as possible within a fixed capacity network link (with a fixed bandwidth) while ensuring that the quality of each AV service remains above an acceptance threshold.

When using Constant Bitrate (CBR) streams, a simple time division multiplexing is often used to share the available bandwidth between AV services. While this is simple in terms of bandwidth allocation to each service, this is unfortunately inefficient in terms of AV coding. Indeed, when using CBR coding, sequences are coded with the same bitrate regardless of their complexity.

Variable Bitrate (VBR) coding allows spending higher bitrates on sequences with higher complexity (for example, sequences with more details, more movement) while ensuring that lower bitrates are used for sequences with lower complexity. The complexity of audio/video content is usually computed in order to decide how much bitrate will be dedicated at a given instance to the coding of the audio/video content.

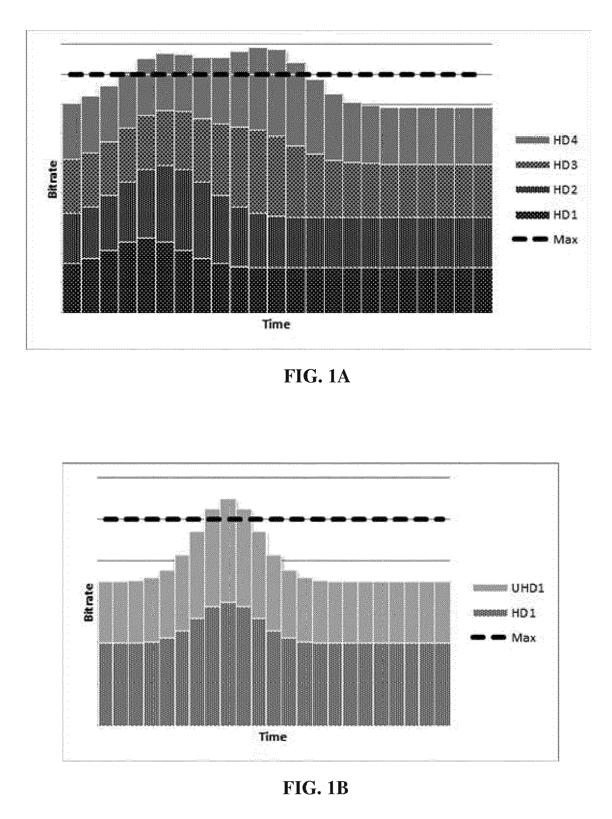

Several VBR streams may be transported within a fixed capacity network link. For example, FIG. 1A illustrates that exemplary sequences HD1, HD2, HD3 and HD4 are transmitted together through a network link with a fixed capacity as shown in the dashed line. When transporting several VBR streams within a fixed capacity network link, we want to make sure that the stream which results from the aggregation of several VBR streams will not exceed the network link capacity and make the best possible use of the total available bandwidth. A frequent solution to this problem is statistical multiplexing.

Statistical multiplexing is based on the assumption that statistically, higher complexity scenes from one stream can happen at the same time as lower complexity scenes from another stream in the same network link. Therefore, extra bandwidth used for coding complex scenes can come from bandwidth savings on the coding of less complex scenes at the same time. Statistical multiplexing usually evaluates in real time the complexity of all AV streams and then allocates the total available bandwidth among each of the streams taking into account the complexity of all streams. When several streams compete for the bandwidth, additional mechanisms such as simple priorities may be used to make decisions on bandwidth sharing.

<u>**SUMMARY**</u>

The invention sets out to remedy some of the drawbacks of the prior art. In particular, in some embodiments, the invention enables to reduce bitrate peaks after multiplexing. The present principles provide a method of processing a first bit stream and a second bit stream, comprising: accessing the first bit stream and the second bit stream wherein the first bit stream corresponds to one of a base layer of layered coded content and an enhancement layer of the layered coded content, and the second bit stream corresponds to the other one of the base layer of the layered coded content and the enhancement layer of the layered coded content; delaying the second bit stream by a first time duration; and multiplexing the first bit stream and the delayed second bit stream as described below.

According to an embodiment, the method further comprises: determining bits in the multiplexed streams exceeding capacity of a network link; and time shifting the determined bits by a second time duration.

According to an embodiment, the method further comprises determining the first time duration responsive to encoding parameters for the layered coded content, the encoding parameters including at least one of a GOP (Group of Picture) length and GOP structure. According to a variant, the first time duration varies with GOPs.

According to an embodiment, the method further comprises transmitting the multiplexed streams and information representative of the first time duration.

The present principles also provide an apparatus for performing these steps.

According to an embodiment, the apparatus is disposed within one of a server and a video multiplexer.

According to an embodiment, the apparatus comprises a transmitting antenna, an interface to a transmitting antenna, a video encoder, a video memory, a video server, an interface with a video camera, and a video camera.

The present principles also provide a method of processing a first bit stream and a second bit stream, comprising: decoding the first bit stream into a first representation of a program content; decoding the second bit stream into a second representation of the program content after a delay from the decoding of the first bit stream, wherein the first bit stream corresponds to one of a base layer of layered coded content and an enhancement layer of the layered coded content, and the second bit stream corresponds to the other one of the base layer of the layered coded content and the enhancement layer of the layered coded content; and outputting signals corresponding to the first representation and the second representation for rendering as described below.

According to an embodiment, the method further comprises rendering the first representation at a speed slower than a speed specified in at least one of the first bit stream, the second bit stream, and a transport stream.

According to an embodiment, the method further comprises rendering the first representation at the specified speed after the rendering of the first and second representations are aligned in time.

According to an embodiment, the method further comprises de-multiplexing the first bit stream, the second bit stream and information representative of the delay from a transport stream.

The present principles also provide an apparatus for performing these steps.

According to an embodiment, the apparatus comprises one or more of the following: an antenna or an interface to an antenna, a communication interface, a video decoder, a video memory and a display.

The present principles also provide a computer readable storage medium having stored thereon instructions for processing a first bit stream and a second bit stream, according to the methods described above.

## BRIEF DESCRIPTION OF THE DRAWINGS

FIG. 1A is a pictorial example depicting four exemplary sequences that are transmitted through a fixed capacity network link, and FIG. 1B is a pictorial example depicting a base layer bit stream and an enhancement layer bit stream from layered coding that are transmitted through a fixed capacity network link.

FIG. 2 is a pictorial example depicting an enhancement layer bit stream (UHD1) shifted by a delay D with regard to a base layer bit stream (HD1), in accordance with an embodiment of the present principles.

FIG. 3 is a flow diagram depicting an exemplary method for performing multiplexing, in accordance with an embodiment of the present principles.

FIG. 4 is a flow diagram depicting an exemplary method for performing channel change, in accordance with an embodiment of the present principles.

FIG. 5 is a flow diagram depicting another exemplary method for performing channel change, in accordance with an embodiment of the present principles.

FIGs. 6A and 6B are pictorial examples depicting what a user may be presented over time according to the method described in FIG. 4, in the "replay" and "wait" modes, respectively, FIG. 6C is a pictorial example depicting what a user may be presented over time according to the method described in FIG. 5, and FIG. 6D illustrates that the base layer and enhancement layer rendering can be aligned according to the method described in FIG. 5.

FIG. 7A is a pictorial example depicting bit streams from two channels, each channel having a base layer and an enhancement layer, and FIG. 7B is a pictorial example depicting that an "over-the-limit" portion of bits is shifted by a time window, in accordance with an embodiment of the present principles.

FIG. 8 is a block diagram depicting an exemplary transmitting system, in accordance with an embodiment of the present principles.

FIG. 9 is a block diagram depicting an exemplary receiving system, in accordance with an embodiment of the present principles.

FIG. 10 is a block diagram depicting another exemplary receiving system, in accordance with an embodiment of the present principles.

## DETAILED DESCRIPTION

When transporting two representations of a same content, it may be advantageous to use layered coding, rather than coding each of them separately and transport them simultaneously over the same network link. With layered coding, the base layer (BL) provides basic quality, while successive enhancement layers (EL) refine the quality incrementally. For example, both HD and UltraHD (UHD) versions of a same content can be delivered as one layered coded content in which the base layer contains the HD version of the media and the enhancement layer contains the extra information needed to rebuild UltraHD content from the HD content.

In layered coding, since the base layer and enhancement layers represent the same content with different qualities, their coding complexity (and therefore their bitrate needs for a proper quality after coding) usually follows a similar trend, and their bitrates usually exhibit peaks and drops at similar time instances. Such bitrate peaks may cause problems for statistical multiplexing which assumes that peaks and drops from different streams should statistically rarely coexist. In particular, simultaneous bitrate peaks from different bit streams can create an overall peak in terms of the total bandwidth usage, and the bitrate need for both the base layer and enhancement layers may exceed the network link capacity dedicated to this service.

For example, as shown in FIG. 1B, an HD and UltraHD version of a same content are encoded using layered coding and the resulting BL and EL bit streams (HD1 and UHD1) are transmitted together through a network link with a fixed capacity as shown in the dashed line. HD1 and UHD1 have bitrate peaks at almost the same time, and the total bitrate exceeds the maximum available bandwidth around the bitrate peak. To avoid the bandwidth overflow, a lower bitrate, and therefore a lower service quality, may be used to re-generate the HD1 or UHD1 bit stream.

In the present principles, we propose different methods to adapt statistical multiplexing for layered coding content. In one embodiment, we introduce a delay in the enhancement layer bit stream or the base layer bit stream such that bitrate peaks from different layers no longer occur simultaneously and the amplitude of the overall peak can be decreased.

In the following examples, we may assume that there is only one enhancement layer in layered coding, and that the layered coding is applied to a video content. The present principles can be applied when there are more enhancement layers and be applied to other type of media, for example, to audio content. In the present application, we use term "BL version" or "BL content" to refer to the original or decoded content corresponding to the base layer, and use term "EL version" or "EL content" to refer to the original or decoded content corresponding to the enhancement layer. Note that to decode the EL version, the base layer is usually needed.

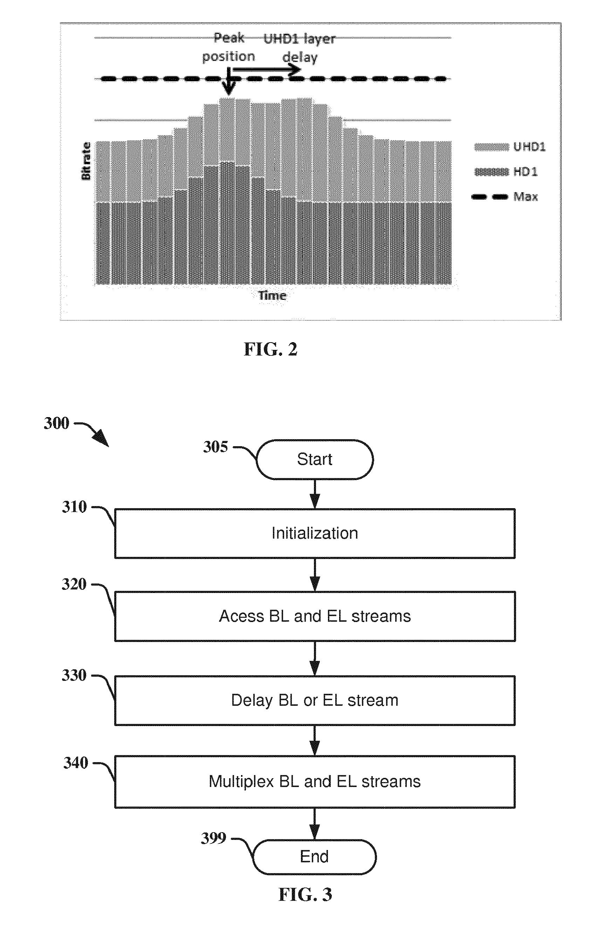

FIG. 2 shows an example wherein the enhancement layer bit stream (UHD1) is shifted by a delay D. By introducing a delay, the high peak shown in FIG. 1B is now transformed into two lower peaks spaced over a duration of D.

FIG. 3 illustrates an exemplary method 300 for performing multiplexing according to an embodiment of the present principles. FIG. 3 starts at step 305. At step 310, it performs initializations, for example, it determines the duration of delay D, and it may also determine whether the base layer bit stream or enhancement layer bit stream is to be delayed. At step 320, it accesses the base layer bit stream and the enhancement layer bit stream, for example, from a layered coder or a server. At step 330, the base layer bit stream or the enhancement layer bit stream is delayed by a duration of D. The bit streams from the base layer and the enhancement layer, possibly delayed, are then multiplexed at step 340. Method 300 ends at step 399.

The delay D may be fixed, and it can be determined based on encoding parameters, for example, based on the GOP (Group of Picture) length and GOP structure as set forth, for example, according to the MPEG standards. In one example, delay D can be set to half the duration of the GOP length. It is also possible to vary the value of D from GOP to GOP. In one example, D may vary with GOP depending on the coding structure (Intra only, IPPPP, IBBB, or random access) and/or GOP length. In another example, if the quality of the enhancement layer is very low, the delay could be small because the enhancement layer bitrate peaks can be small. If we vary delay D from GOP to GOP, the decoder needs to know the maximum value of D (Dmax) to decide its buffer size, and Dmax must be signaled to the decoder.

In some GOP structures, for example, I0P8B4B2b1b3B6b5b7, there is a significant delay between reception of the first image (I0) and the second image in the display order (b1). To avoid the scenario where the data runs out at decoding, in the present application, we assume that the entire GOP is needed before starting decoding the GOP. The present principles can also be applied when the decoding starts at a different time.

With traditional MPEG video coding, the maximum channel change time (also known as zap time) is usually 2 GOP times. For layered coding, since the enhancement layer can only be decoded after the base layer is received and decoded, the channel change time for the enhancement layer is equal to 2 maximum GOP times, wherein the maximum GOP time is the largest GOP time used among the base layer and enhancement layer(s) needed to decode a given layer. When BL and ELs have the same GOP size, the channel change time is 2 GOP times, the same as in traditional MPEG video coding.

As shown in method 300, a delay can be added to the enhancement layer or the base layer. When the delay is added to the base layer with regard to the enhancement layer (that is, the enhancement layer is sent before the base layer), at the time the first entire GOP of the base layer (BL GOP) is received and ready for display, the first entire GOP of the enhancement layer (EL GOP) could also have been received, and rendering could start directly in the EL version. If longer GOPs are used in the enhancement layer than in the base layer (which is often the case), the first EL GOP may not be entirely received when the first entire BL GOP is received, then the base layer must be rendered first and switching to the enhancement layer can be performed as described below for the scenario where the delay is added to the enhancement layer with regard to the base layer. One advantage of adding the delay to the base layer with regard to the enhancement layer is that the channel change time for the enhancement layer is decreased, even though there might be an extra playback delay, which is usually not an issue except for live events.

When the delay is added to the enhancement layer with regard to the base layer, the channel change time of the enhancement layer becomes (2 GOP times + D). The additional delay D may make the channel change time too long. It also may make it difficult for users to understand that for a given content, why channel changes much faster on the BL version (HD for instance) than the EL version (UltraHD for instance).

In order to reduce channel change time, the present principles provide different channel change mechanism for the EL content, for example, as described further below in methods 400 and 500.

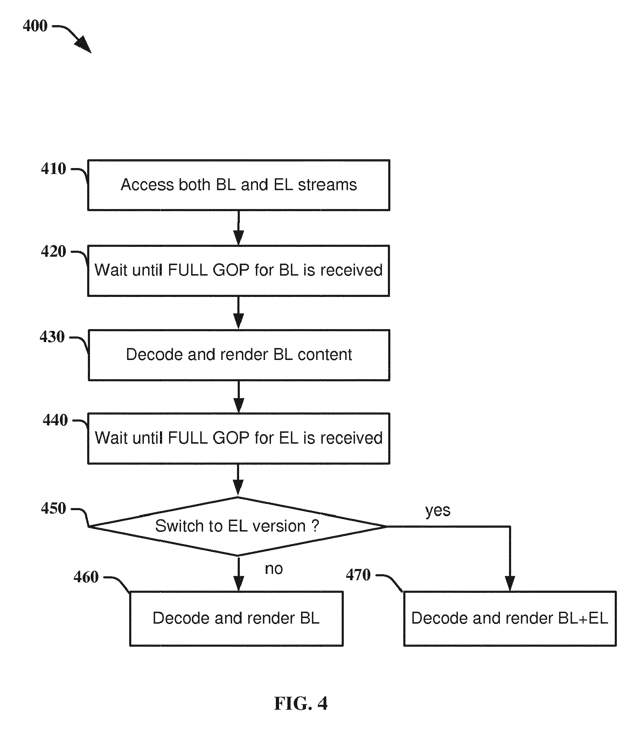

FIG. 4 illustrates an exemplary method 400 for performing channel change according to an embodiment of the present principles. At step 410, when the user requests a channel change to a new stream (at time T0), it receives BL and possibly EL bit streams of the new stream. At step 420, it continues buffering the BL (and EL) until one full BL GOP is received (at time T1). At step 430, it decodes and renders the BL content to the display. Note that what is done up to this point is a typical channel change for the BL.

At time T1, we can display the BL content but not the EL content since the EL bit stream is delayed by D. For ease of notation, we use Fi to denote the ith frame to be rendered. At step 440, until one full EL GOP is received (at time T2), it continues decoding and rendering the BL content while buffering the EL bit stream.

At time $T_2$, the decoder is now ready to decode and display the first frame $F_0$ for the EL content, but the first frame $F_0$ for the BL content has already been rendered at time $T_1$ since EL is delayed by D ($D = T_2 - T_1$). To resynchronize the two layers, two modes could be used:

- "Replay" mode: The display switches to the EL version at time $T_2$, and the first EL frame will be $F_0$ again. That is, the content may appear to go backward or being replayed for a brief period.

- "Wait" mode: The display process is paused at time $T_2$, in order to switch from display frame $F_n$ (BL) to display frame $F_{n+1}$ (EL).

At time $T_2$, the user has the option (step 450), for example, through a pop-up, to switch to the EL version. While the user is making the decision (for example, when the pop-up is presented to the user), the BL version can still be rendered in the background. If the user chooses not to switch to the EL version, BL decoding and rendering continue at step 460. Otherwise, if the user decides to switch to the EL version, the decoder starts decoding and rendering the EL frame at step 470, for example, using the "replay" mode or "wait" mode.

The advantage of method 400 is that it is simple, and it allows the user to change quickly across several channels by looking at the BL versions and he is offered the option to watch the EL version only when it is actually available. In one embodiment, the decoder may propose a user setting so as to decide whether to display such an option or always automatically switch to the EL version when it becomes available.

When the user switches from the BL version to the EL version, the quality may improve significantly and the user may notice a quality jump. To smooth the quality transition, we can use progressive "upscaling" from the BL to EL, for example, using the method described in US Application No. 13/868,968, titled "Method and apparatus for smooth stream switching in MPEG/3GPP-DASH," by Yuriy Reznik, Eduardo Asbun, Zhifeng Chen, and Rahul Vanam.

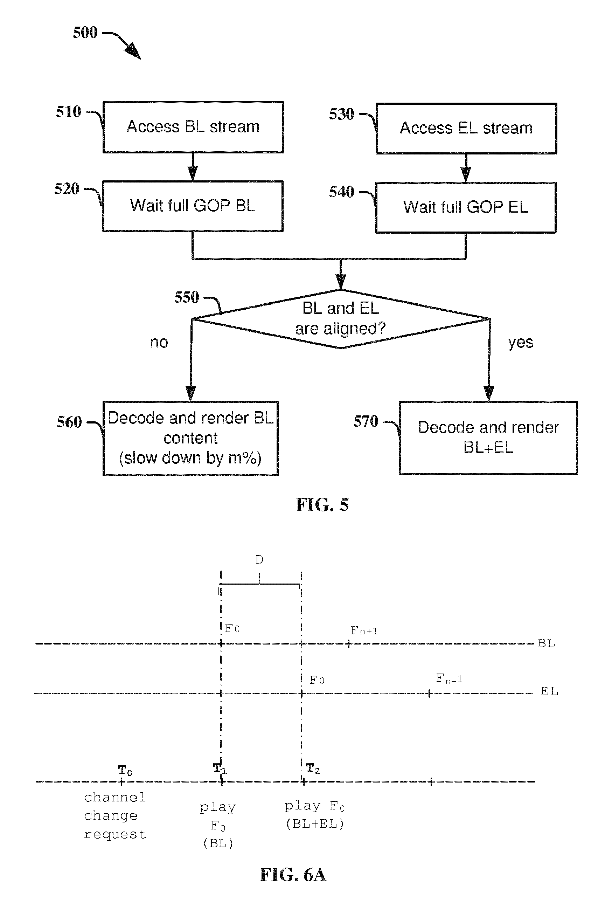

FIG. 6A illustrates what a user may be presented over time according to method 400, in response to user requested channel change, wherein the user chooses to switch to the EL version in the "replay" mode. At time $T_0$, the user requests a channel change. At time $T_1$, a full BL GOP becomes available, and it decodes and renders the BL content, starting from frame $F_0$ for the BL. At time $T_2$, a full EL GOP become available, and it decodes the EL stream. Also using the buffered BL content, it renders an EL version of $F_0$. Overall, the rendered sequence is: $F_0$(BL), $F_1$(BL), $F_2$(BL), ..., $F_n$(BL), $F_0$(EL), $F_1$(EL), $F_2$(EL), ..., $F_n$(EL), $F_{n+1}$(EL), $F_{n+2}$(EL), ... Notice that in the "replay" mode, frames $F_0$ to $F_n$ are played twice, first in the BL verion, then in the EL versión.

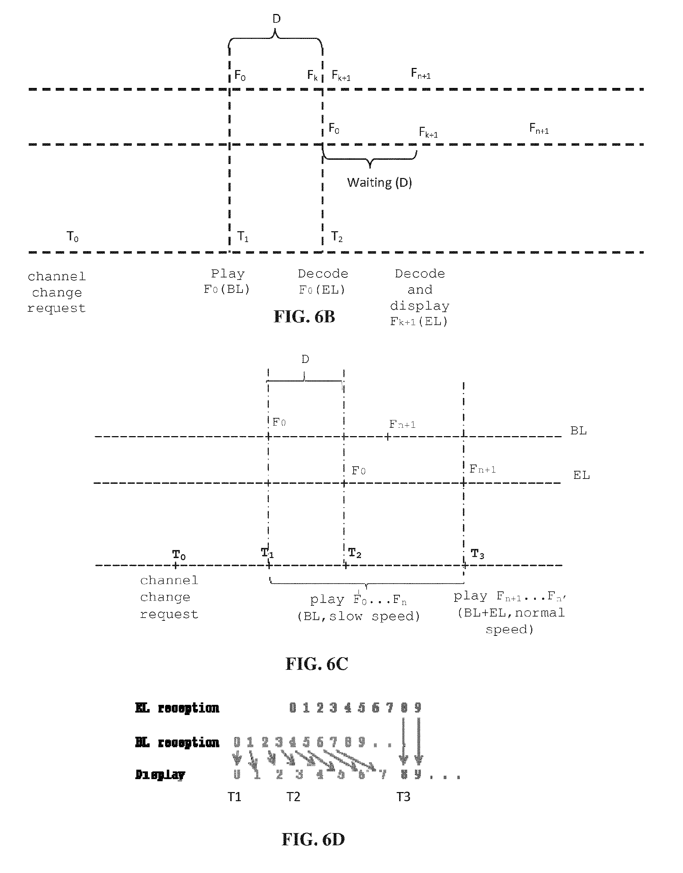

FIG. 6B illustrates what a user may be presented over time according to method 400, in response to user requested channel change, wherein the user chooses to switch to the EL version in the "wait" mode. At time $T_0$, the user requests a channel change. At time $T_1$, a full BL GOP becomes available, and it decodes and renders the BL content, starting from frame $F_0$ for the BL. At time $T_2$, a full EL GOP become available, and it decodes the EL stream. Between time $T_1$ and $T_2$, frames $F_0$ to $F_k$ have been rendered. The rendering of the BL content is paused at time $T_2$, for a period, until the (k+1)th frame of the EL content becomes available. Overall, the rendered sequence is: $F_0$(BL), $F_1$(BL), $F_2$(BL), ..., $F_k$(BL), pause(D), $F_{k+1}$(EL), $F_{k+2}$(EL), ... In the "wait" mode, the displayed video may show a pause when the BL version switches to the EL version.

FIG. 5 illustrates another exemplary method 500 for performing channel change according to another embodiment of the present principles. Without loss of generality, we assume that frame rates of the BL and EL are the same. The present principles can still be applied when the frame rates are different.

At step 510, it accesses the base layer bit stream. It buffers the BL stream at step 520 until the decoding can start when a full BL GOP is received. At step 530, it accesses the enhancement layer bit stream. It buffers the EL stream at step 540 until the decoding can start when a full EL GOP is received. Due to the addition of delay D, BL is in advance of the EL by N frames where:

$$N = \begin{cases} \text{FrameRate} \times D, & \text{when FrameRate} \times D \text{ is an integer} \\ E[\text{ FrameRate} \times D] + 1, & \text{otherwise, where } E[X] \text{ is the integer part of } X \end{cases}$$

Due to delay D, at the beginning of the decoding, the decoded frames from the BL and ELs may not be aligned. In order to align the rendering in time of the BL and EL contents, the present embodiments propose to slow down the rendering of BL by m% at step 560, before they are aligned. Note that the video content is usually rendered at a frame rate specified for playback in the bit stream. However, in method 500, in order to align the BL and EL, the rendering of BL is m% slower than the specific frame rate. Consequently, at some time $T_3$, both the BL and EL content will be aligned and offer the same frame at the same time. If it determines that the BL and EL contents are aligned at step 550, it renders of the BL and EL at a normal speed as specified in the bitstream at step 570. Using method 500, a decoder can seamlessly switch from BL to EL without breaking the frame flow.

Time $T_3$ can be obtained using the following formula:

$$T_3 = T_1 + D * 100 / m.$$

The choice of m is important. The greater m is, the more likely the user will notice the slow-down effect, therefore it is important to keep m low. On the other hand, the smaller m is, the longer it will take for the BL and EL to be aligned (at time $T_3$). There is a trade-off that is to be decided in the decoder. Such a decoder setting may or may not be presented to the user.

When the decrease in the rendering speed is low enough (i.e., a small value of m), the slowing on video is usually hardly perceivable by the user. However, a slow down of an audio stream is more noticeable, and we may use some existing solutions to change the pitch of the sound in order to hide the slowing.

FIG. 6C illustrates what a user may be presented over time according to method 500, in response to user requested channel change. At time $T_0$, the user requests a channel change. At time $T_1$, a full BL GOP becomes available, and it decodes and renders the BL content, starting from frame $F_0$ for the BL. At time $T_2$, a full EL GOP becomes available, and it decodes the EL content. At time $T_3$, the decoding of BL and EL contents are aligned. Between time $T_1$ and $T_3$, the BL content is rendered at a slower speed for the EL to catch up, and the EL stream is decoded but not rendered. After time $T_3$, both BL and EL contents are rendered at a normal speed. Differently from FIG. 6A, each frame is played only once and the switch from the BL to the EL is seamless.

Using ten frames as examples, FIG. 6D illustrates how the BL and EL rendering can be aligned according to method 500. Note that depending on the slow-down factor, several GOPs may be needed to align both the BL and EL.

As discussed above, adding a delay to the base layer or enhancement bit stream helps in reducing simultaneous bitrate peaks of BL and EL streams, and thus more efficiently uses the bandwidth. However, it sometimes may not be enough to completely eliminate the bandwidth overflow. Therefore, in addition to adding delay D, the present principles also propose using a time window W when transmitting the bitstream.

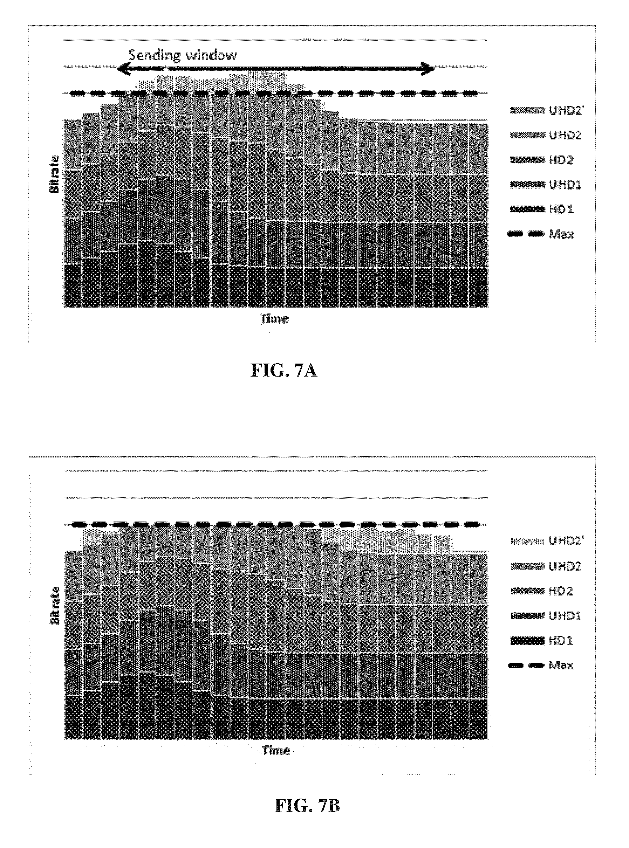

To illustrate how the time window works, FIG. 7A shows bitstreams from two channels without using a delay between the base layer and enhancement layer. Each bar in the figure corresponds to one time unit for purposes of discussion in the present application. Content for channel 1 is encoded using two layers: HD1 and UHD1, and content for channel 2 is also encoded using two layers: HD2 and UHD2. Each channel has one peak, around time = 5 for channel 1 and around time = 12 for channel 2. As shown in FIG. 7A, the aggregated bit stream exceeds the maximum bandwidth.

In order to fit the bit streams into the fixed bandwidth, bits exceeding the bandwidth are shifted, backward or forward, within a time window W. Consequently, all streams can be transmitted within the network link capacity. For ease of notation, we denote the portion of bits that exceeds the bandwidth as an "over-the-limit" portion (UHD2'). One example of using the time window is shown in FIG. 7B, which works on the same bit streams as shown in FIG. 7A. As shown in FIG. 7B, all data above the limit from t=4 to t=12 are spread into the window (from t=1 to t=22). As soon as spare bitrates are available, we use them for the "over-the-limit" data. In one embodiment, the system determines parameters of the sliding window, including the starting time and ending time for a current time. The time window may vary from time to time, and is not necessarily centered around the current time.

We have discussed introducing delay D and time window W in order to multiplex bit streams. These two mechanisms can be used separately or jointly. When introducing delay D, an entire BL or EL stream is shifted in time. By contrast, when using time window W, we first determine whether the overall bitrate of all bitstreams goes beyond the maximum allowed bitrate, and if there exists an "over-the-limit" portion, we re-distribute the "over-the-limit" portion. Further, as discussed before, delay D may be determined based on encoding parameters or take a pre-determined value. By contrast, time shift W when using the time window depends on where bitrate peaks are and where there is spare bit rate available.

When a time window is used to shift the "over-the-limit" portion of bits, the channel change mechanisms described before for using a delay (for example, methods 400 and 500) are still applicable. In particular, the value of $T_3$ can be computed with W (replacing D) when the time window is used alone, or W + D (replacing D) when both delay D and time window are used.

Even using both delay D and time window, the aggregated bit stream may still exceed the network link capacity. In this case, we may decrease the bitrate of one or several stream within the same network link so as to fit the bit streams into the network link, or we may even have to drop one or more bit stream.

The present principles propose different methods, such as adding a delay to a base layer bit stream or an enhancement layer bit stream, and shifting an "over-the-limit" portion of bits within a time window, to more efficiently use the bandwidth. Particularly, our methods work well for transmitting layered coded content, which does not satisfy the usual assumption of statistical multiplexing.

At the receiver side, even given the delay added in the bit streams, the present principles provide different channel change mechanisms to allow a user to change channel quickly. In particular, a decoder can start rendering the BL content, without having to wait for the EL to be available. Advantageously, this allows the user to quickly change channel between many channels until he sees something he would like to watch for a longer time. The present principles also provide the option for the use to decide whether he wants to switch to the EL version after watching the video for a period of time.

In the above, we discuss various methods that can be used for layered coding. The present principles can also be applied to scalable video coding, which are compliant with a standard, for example, but not limited to, H.264 SVC or SHVC. The multiplexing methods and the channel change mechanisms can be used together with any transport protocol, such as MPEG-2 Transport, MMT (MPEG Media Transport) protocol, or ATSC (Advanced Television Systems Committee) transport protocol.

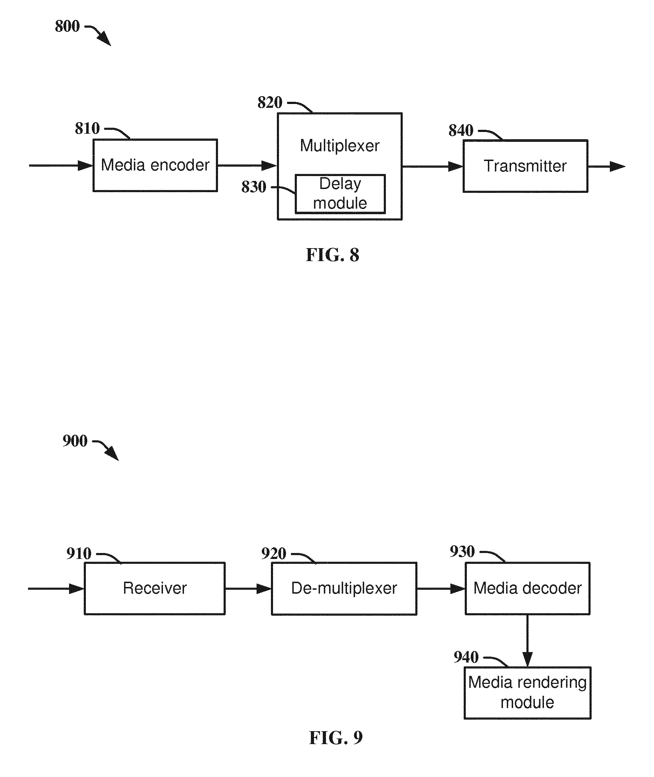

FIG. 8 illustrates an exemplary transmitting system 800. The input data, for example, but not limited to, audio and video data, are encoded at media encoder 810. The input data can be from a camera, camcorder, or received from a server that has access to the audio and video data. The encoded data is multiplexed at multiplexer 820, and transmitted at transmitter 840. The multiplexing mechanisms according to the present principles, for example, adding a delay as shown in method 300 and using a time window, can be used in a delay module (830) that is located in multiplexer 820. Delay module 830 can also located in media encoder 810 or sit between media encoder 810 and multiplexer 820 as a separate module. The transmitting system may be used in a typical broadcast TV environment where bandwidth is an expensive resource, or may be used in a mobile device that provides audiovisual service. According to specific embodiments, the transmitting system (or apparatus) is disposed within one of a server and a video multiplexer. According to specific embodiments, the transmitting system (or apparatus) comprises one or more of the following: a transmitting antenna, an interface to a transmitting antenna, a video encoder, a video memory, a video server, an interface with a video camera, and a video camera.

FIG. 9 illustrates an exemplary receiving system 900. The input data of system 900 may be a transport bitstream, for example, the output of system 800. The data is received at receiver 910, de-multiplexed at de-multiplexer 920, decoded at media decoder 930, and then rendered for playback at media rendering module 940. Media rendering module can be implemented in separate modules, or can be part of media decoder 930. The channel change mechanisms, such as methods 400 and 500, may be implemented in de-multiplexer 920 or media decoder 930.

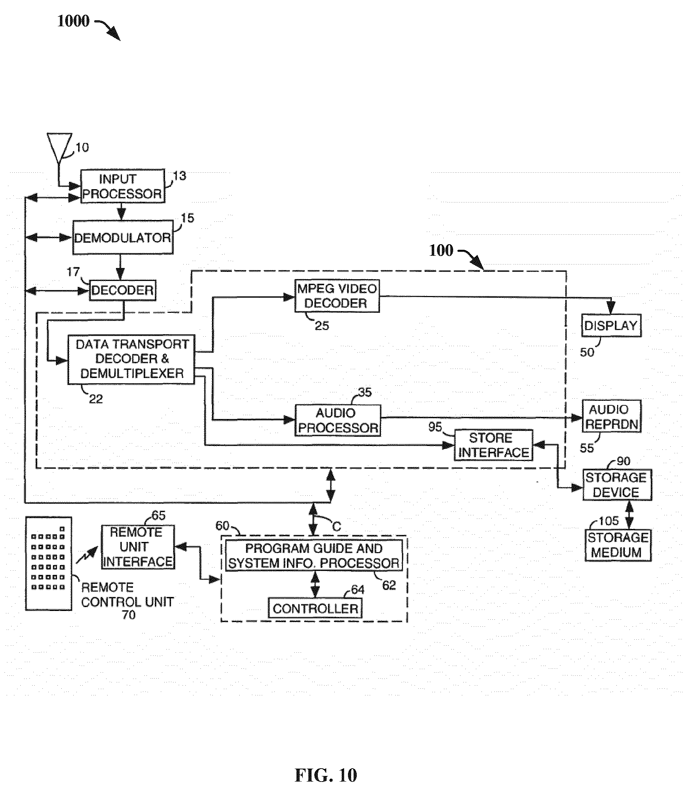

.FIG. 10 illustrates another exemplary receiving system 1000, which may be implemented within a portable media device (for example, a mobile phone), a gaming device, a set top box, a TV set, a tablet, and a computer. In overview, in the video receiver system of FIG. 10, a broadcast carrier modulated with signals carrying audio, video and associated data representing broadcast program content is received by antenna 10 and processed by unit 13. The resultant digital output signal is demodulated by demodulator 15. The demodulated output from unit 15 is trellis decoded, mapped into byte length data segments, deinterleaved and Reed-Solomon error corrected by decoder 17. The output data from unit 17 is in the form of an MPEG compatible transport datastream, for example, an MMT transport stream, containing program representative multiplexed audio, video and data components. The transport stream from unit 17 is demultiplexed into audio, video and data components by unit 22 which are further processed by the other elements of decoder 100.

Decoder (100) may perform channel change according to the present principles, such as those described in methods 400 and 500, when a user requests a channel change. In one mode, decoder 100 provides MPEG decoded data for display and audio reproduction on units 50 and 55, respectively. In another mode, the transport stream from unit 17 is processed by decoder 100 to provide an MPEG compatible datastream for storage on storage medium 105 via storage device 90.

A user selects for viewing either a TV channel or an on-screen menu, such as a program guide, by using a remote control unit 70. Processor 60 uses the selection information provided from remote control unit 70 via interface 65 to appropriately configure the elements of FIG. 10 to receive a desired program channel for viewing. Processor 60 comprises processor 62 and controller 64. Unit 62 processes (i.e., parses, collates and assembles) program specific information including program guide and system information and controller 64 performs the remaining control functions required in operating decoder 100. Although the functions of unit 60 may be implemented as separate elements 62 and 64 as depicted in FIG. 10, they may alternatively be implemented within a single processor. For example, the functions of units 62 and 64 may be incorporated within the programmed instructions of a microprocessor. Processor 60 configures processor 13, demodulator 15, decoder 17 and decoder system 100 to demodulate and decode the input signal format and coding type.

Considering FIG. 10 in detail, a carrier modulated with signals carrying program representative audio, video and associated data received by antenna 10, is converted to digital form and processed by input processor 13. Processor 13 includes radio frequency (RF) tuner and intermediate frequency (IF) mixer and amplification stages for downconverting the input signal to a lower frequency band suitable for further processing.

It is assumed for exemplary purposes that a video receiver user selects a sub-channel (SC) for viewing using remote control unit 70. Processor 60 uses the selection information provided from remote control unit 70 via interface 65 to appropriately configure the elements of decoder 100 to receive the physical channel corresponding to the selected sub-channel SC.

The output data provided to processor 22 is in the form of a transport datastream containing program channel content and program specific information for many programs distributed through several sub-channels.

Processor 22 matches the Packet Identifiers (PIDs) of incoming packets provided by decoder 17 with PID values of the video, audio and sub-picture streams being transmitted on sub-channel SC. These PID values are pre-loaded in control registers within unit 22 by processor 60. Processor 22 captures packets constituting the program transmitted on sub-channel SC and forms them into MPEG compatible video, audio streams for output to video decoder 25, audio decoder 35 respectively. The video and audio streams contain compressed video and audio data representing the selected sub-channel SC program content.

Decoder 25 decodes and decompresses the MPEG compatible packetized video data from unit 22 and provides decompressed program representative pixel data to device 50 for display. Similarly, audio processor 35 decodes the packetized audio data from unit 22 and provides decoded audio data, synchronized with the associated decompressed video data, to device 55 for audio reproduction.

In a storage mode of the system of FIG. 10, the output data from unit 17 is processed by decoder 100 to provide an MPEG compatible datastream for storage. In this mode, a program is selected for storage by a user via remote unit 70 and interface 65.

Processor 60, in conjunction with processor 22 forms a composite MPEG compatible datastream containing packetized content data of the selected program and associated program specific information. The composite datastream is output to storage interface 95. Storage interface 95 buffers the composite datastream to reduce gaps and bit rate variation in the data. The resultant buffered data is processed by storage device 90 to be suitable for storage on medium 105. Storage device 90 encodes the buffered datastream from interface 95 using known error encoding techniques such as channel coding, interleaving and Reed Solomon encoding to produce an encoded datastream suitable for storage. Unit 90 stores the resultant encoded datastream incorporating the condensed program specific information on medium 105.

According to specific embodiments, the receiving system (or apparatus) comprises one or more of the following: an antenna or an interface to an antenna, a communication interface (e.g. from a wired or wireless link or network), a video decoder, a video memory and a display.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs") and other devices that facilitate communication of information between end-users.

According to specific embodiments of the method of processing a first bit stream and a second bit stream, the first bit stream and the second bit stream are accessed from a source belonging to a set comprising: a transmitting antenna, an interface to a transmitting antenna, a video encoder, a video memory, a video server, an interface with a video camera, and a video camera. According to a variant of the method, the multiplexed first bit stream and the second bit stream are sent to a destination belonging to a set comprising: a transmitting antenna, an interface to a transmitting antenna, a communication interface, a video memory, a video server interface and a client device.

According to specific embodiments of the method comprising decoding of first bit stream and the second bit stream, the first bit stream and the second bit stream are accessed before decoding from a source belonging to a set comprising a receiving antenna, an interface to a receiving antenna, a communication interface and a video memory. According to a variant of the method, signals corresponding to the first representation and the second representation for rendering are outputted to a destination belonging to a set comprising a video decoder, a video memory and a display.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bit stream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of processing a first bit stream and a second bit stream, comprising:

   accessing (320) the first bit stream and the second bit stream wherein the first bit stream corresponds to one of a base layer of layered coded content and an enhancement layer of the layered coded content, and the second bit stream corresponds to the other one of the base layer of the layered coded content and the enhancement layer of the layered coded content;
   delaying (330) the second bit stream by a first time duration; and
   multiplexing (340) the first bit stream and the delayed second bit stream.

2. The method of claim 1, further comprising:

   determining bits in the multiplexed streams exceeding capacity of a network link; and
   time shifting the determined bits by a second time duration.

3. The method of any of claim 1 or 2, further comprising:

determining the first time duration responsive to encoding parameters for the layered coded content, the encoding parameters including at least one of a GOP (Group of Picture) length and GOP structure.

**4.** The method of claim 3, wherein the first time duration varies with GOPs.

**5.** The method of any of claims 1 to 4, further comprising:

transmitting the multiplexed streams and information representative of the first time duration.

**6.** A method of processing a first bit stream and a second bit stream, comprising:

decoding (430, 570) the first bit stream into a first representation of a program content;
decoding (470, 570) the second bit stream into a second representation of the program content after a delay from the decoding of the first bit stream, wherein the first bit stream corresponds to one of a base layer of layered coded content and an enhancement layer of the layered coded content, and the second bit stream corresponds to the other one of the base layer of the layered coded content and the enhancement layer of the layered coded content; and
outputting (470, 570) signals corresponding to the first representation and the second representation for rendering.

**7.** The method of claim 6, further comprising:

rendering (560) the first representation at a speed slower than a speed specified in at least one of the first bit stream, the second bit stream, and a transport stream.

**8.** The method of claim 7, further comprising:

rendering (570) the first representation at the specified speed after the rendering of the first and second representations are aligned in time.

**9.** The method of claim 6, further comprising:

de-multiplexing the first bit stream, the second bit stream and information representative of the delay from a transport stream.

**10.** An apparatus for processing a first bit stream and a second bit stream according to claims 1-9.

**11.** The apparatus of claim 10, wherein the apparatus is disposed within one of a server and a video multiplexer.

**12.** The apparatus of claim 10 or 11, wherein the apparatus comprises one or more of the following:

a transmitting antenna, an interface to a transmitting antenna, a video encoder, a video memory, a video server, an interface with a video camera, and a video camera.

**13.** The apparatus of claim 10, wherein the apparatus is disposed within one of a portable media device, a mobile phone, a gaming device, a set top box, a TV set, a tablet, a laptop and an integrated circuit.

**14.** The apparatus of claim 13, wherein the apparatus comprises one or more of the following: an antenna or an interface to an antenna, a communication interface, a video decoder, a video memory and a display.

**15.** A computer readable storage medium having stored thereon instructions for processing a first bit stream and a second bit stream, according to claims 1-9.

**FIG. 1A**

**FIG. 1B**

**FIG. 2**

**FIG. 3**

400

410 — Access both BL and EL streams

420 — Wait until FULL GOP for BL is received

430 — Decode and render BL content

440 — Wait until FULL GOP for EL is received

450 — Switch to EL version ?

yes

no

460 — Decode and render BL

470 — Decode and render BL+EL

**FIG. 4**

500

510 — Access BL stream    530 — Access EL stream

520 — Wait full GOP BL    540 — Wait full GOP EL

550 — BL and EL are aligned?

no                                          yes

560 — Decode and render BL content (slow down by m%)    570 — Decode and render BL+EL

**FIG. 5**

D

$F_0$                    $F_{n+1}$ ────────── BL

$F_0$                    $F_{n+1}$ ────────── EL

$T_0$        $T_1$        $T_2$

channel change request        play $F_0$ (BL)        play $F_0$ (BL+EL)

**FIG. 6A**

D

$F_0$      $F_k$   $F_{k+1}$      $F_{n+1}$

$F_0$      $F_{k+1}$      $F_{n+1}$

Waiting (D)

$T_0$      $T_1$    $T_2$

channel       Play      Decode     Decode
change      $F_0$(BL)    $F_0$(EL)     and
request                           display
                                      $F_{k+1}$(EL)

**FIG. 6B**

D

$F_0$      $F_{n+1}$           BL

$F_0$      $F_{n+1}$           EL

$T_0$     $T_1$      $T_2$      $T_3$

channel
change          play $F_0 \ldots F_n$     play $F_{n+1} \ldots F_{n'}$
request        (BL, slow speed)    (BL+EL, normal
                                       speed)

**FIG. 6C**

EL reception     0 1 2 3 4 5 6 7 8 9

BL reception   0 1 2 3 4 5 6 7 8 9 . .

Display        0 1 2 3 4 5 6 7 8 9 . . .

T1      T2         T3

**FIG. 6D**

15

**FIG. 7A**

**FIG. 7B**

**FIG. 8**

**FIG. 9**

1000 ⌐◄

**FIG. 10**

Europäisches
Patentamt

European
Patent Office

Office européen
des brevets

# EUROPEAN SEARCH REPORT

Application Number

EP 14 30 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOKANG YANG ET AL: "Statistical Multiplexing based on MPEG-4 Fine Granularity Scalability Coding", THE JOURNAL OF VLSI SIGNAL PROCESSING, KLUWER ACADEMIC PUBLISHERS, BO, vol. 42, no. 1, 1 January 2006 (2006-01-01), pages 69-77, XP019216692, ISSN: 1573-109X, DOI: 10.1007/S11265-005-4164-Y | 1-6,9 | INV. H04N21/2343 H04N21/2365 H04N21/43 H04N21/4402 ADD. H04N21/234 H04N21/438 |
| Y | * figures 1,2,5 * * Section 3.2 "Frame Lag Scheme" * * Section 4.3 "Statistical Multiplexing Rules" * ----- | 7,8 | |
| Y | EP 2 439 947 A1 (HUAWEI TECH CO LTD [CN]) 11 April 2012 (2012-04-11) * paragraph [0052] * * paragraphs [0056] - [0057] * * paragraph [0067] * * paragraph [0073] * * paragraphs [0158] - [0161] * ----- | 7,8 | |
| X | US 2012/320911 A1 (HWANG SUNG-OH [KR] ET AL) 20 December 2012 (2012-12-20) * paragraphs [0011], [0022], [0044], [0046], [0047], [0051], [0052], [0074], [0077], [0093] * * figures 3,4,6 * ----- | 1-6, 10-15 | TECHNICAL FIELDS SEARCHED (IPC) H04N |
| X | WO 2010/054719 A1 (FRAUNHOFER GES FORSCHUNG [DE]; FUCHS HARALD [DE]; DOEHLA STEFAN [DE];) 20 May 2010 (2010-05-20) | 1,6 | |
| A | * figures 1A, 1B, 4, 5 * * page 8, line 19 - line 32 * * page 9, line 8 - line 28 * * page 12, line 31 - line 35 * * page 18, line 4 - line 15 * ----- -/-- | 2-5,7-15 | |

The present search report has been drawn up for all claims

| Place of search | Date of completion of the search | Examiner |
|---|---|---|
| The Hague | 12 May 2014 | Lefol, Damien |

**EP 2 894 860 A1**

Europäisches
Patentamt

European
Patent Office

Office européen
des brevets

# EUROPEAN SEARCH REPORT

**Application Number**

EP 14 30 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TZU-YI HUNG ET AL: "Packet scheduling with playout adaptation for scalable video delivery over wireless networks", JOURNAL OF VISUAL COMMUNICATION AND IMAGE REPRESENTATION, ACADEMIC PRESS, INC, US, vol. 22, no. 6, 16 June 2011 (2011-06-16), pages 491-503, XP028261326, ISSN: 1047-3203, DOI: 10.1016/J.JVCIR.2011.06.001 [retrieved on 2011-06-21] * Section 3.2 "Playout Adaptation" * ----- | 7,8 | |
| A | LINAWATI ET AL: "Statistical multiplexing strategies for self-similar traffic", WIRELESS AND OPTICAL COMMUNICATIONS NETWORKS, 2008. WOCN '08. 5TH IFIP INTERNATIONAL CONFERENCE ON, IEEE, PISCATAWAY, NJ, USA, 5 May 2008 (2008-05-05), pages 1-5, XP031272571, ISBN: 978-1-4244-1979-1 * Section III "Statistical multiplexing strategies" * ----- | 1-5 | **TECHNICAL FIELDS SEARCHED (IPC)** |
| A | RAGHUVEERA T ET AL: "An Efficient Statistical Multiplexing Method for H.264 VBR Video Sources for Improved Traffic Smoothing", INTERNATIONAL JOURNAL OF COMPUTER SCIENCE AND INFORMATION TECHNOLOGY, vol. 2, no. 2, 25 April 2010 (2010-04-25), pages 53-64, XP055117267, ISSN: 0975-4660, DOI: 10.5121/ijcsit.2010.2205 * Section 3 : "Existing methodologies" * * Section 4: "The new method (ERA)" * ----- | 1-5 | |

The present search report has been drawn up for all claims

| Place of search | Date of completion of the search | Examiner |
|---|---|---|
| The Hague | 12 May 2014 | Lefol, Damien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

20

**ANNEX TO THE EUROPEAN SEARCH REPORT
ON EUROPEAN PATENT APPLICATION NO.**                    EP 14 30 5052

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2014

| Patent document cited in search report | | Publication date | Patent family member(s) | | Publication date |
|---|---|---|---|---|---|
| EP 2439947 | A1 | 11-04-2012 | AU | 2010256136 A1 | 19-01-2012 |
| | | | CN | 101909196 A | 08-12-2010 |
| | | | EP | 2439947 A1 | 11-04-2012 |
| | | | EP | 2696595 A2 | 12-02-2014 |
| | | | JP | 2012529205 A | 15-11-2012 |
| | | | KR | 20120018201 A | 29-02-2012 |
| | | | RU | 2011151995 A | 27-07-2013 |
| | | | SG | 176682 A1 | 30-01-2012 |
| | | | US | 2012084826 A1 | 05-04-2012 |
| | | | US | 2014082683 A1 | 20-03-2014 |
| | | | WO | 2010139284 A1 | 09-12-2010 |
| US 2012320911 | A1 | 20-12-2012 | EP | 2721815 A2 | 23-04-2014 |
| | | | KR | 20120138319 A | 26-12-2012 |
| | | | US | 2012320911 A1 | 20-12-2012 |
| | | | WO | 2012173396 A2 | 20-12-2012 |
| WO 2010054719 | A1 | 20-05-2010 | NONE | | |

EPO FORM P0459

For more details about this annex : see Official Journal of the European Patent Office, No. 12/82

**REFERENCES CITED IN THE DESCRIPTION**

**Patent documents cited in the description**

- US 13868968 B